# EUROPÄISCHE PATENTSCHRIFT

(11) **EP 3 110 668 B1**
(45) Veröffentlichungstag und Bekanntmachung des Hinweises auf die Patenterteilung: **24.01.2018**
(21) Anmeldenummer: 15710727.7
(22) Anmeldetag: 25.02.2015
(51) Int. Cl.: B60R 21/36

(54) **RÜCKHOLEINRICHTUNG**
RETRACTING DEVICE
DISPOSITIF DE RAPPEL

(30) Priorität: 26.02.2014 DE 102014203489; 25.04.2014 DE 102014207841
(43) Veröffentlichungstag der Anmeldung: 04.01.2017
(73) Patentinhaber: Takata AG, 63743 Aschaffenburg (DE)
(72) Erfinder: STEINKE, Norman, 10785 Berlin (DE); PORSTMANN, Marco, 16548 Glienicke/Nordbahn (DE); LUBE, Thomas, 13591 Berlin (DE); KALLISKE, Ingo, 14476 Potsdam (DE); CLAUSS, Yves, 14482 Potsdam (DE)
(74) Vertreter: Maikowski & Ninnemann Patentanwälte Partnerschaft mbB
(86) Internationale Anmeldenummer: PCT/EP2015/053915
(87) Internationale Veröffentlichungsnummer: WO 2015/128369

(56) Entgegenhaltungen:
- EP-A1- 2 481 647
- WO-A1-2012/101196
- DE-U1-202012 011 053

## Beschreibung

Die Erfindung betrifft eine Rückholeinrichtung gemäß dem Oberbegriff des Anspruchs 1. Derartige Rückholeinrichtungen dienen als Bestandteil einer Gassackanordnung eines Kraftfahrzuges zum Bewegen zumindest eines Teilabschnittes eines entlang einer Außenseite eines Fahrzeugs (insbesondere entlang einer Windschutzscheibe) entfalteten Gassacks aus dem Sichtfeld eines auf einem vorderen Fahrzeugsitz des Fahrzeugs befindlichen Fahrzeuginsassen (insbesondere aus dem Sichtfeld des Fahrzeugführers).

Beispielsweise ist eine solche Rückholeinrichtung aus der EP 2 570 307 A1 bekannt. Das Bewegen des Gassackes aus dem Sichtfeld des Fahrzeugführers erfolgt hier durch das Aufwickeln eines flexiblen Rückholelementes (insbesondere in Form eines Rückholseils), welches zwischen dem Gassack und einer Rückholeinrichtung verläuft, auf eine Spule. Für ein zuverlässiges Aufwickeln des Rückholelementes ist die Spule an ihrem Außendurchmesser mit einem Gewinde versehen. Das Gewinde weist einen großen Außendurchmesser verbunden mit einer großen Gewindetiefe (Tiefe der Gewinderille) auf. Dies ist notwendig, um die Führung des Rückholelementes für ein korrektes Aufwickeln auch unter ungünstigen Bedingungen (z.B. stark schwankende Winkel zwischen dem Rückholelementes und der Spule beim Aufwickeln des Rückholelementes) garantieren zu können. Nachteilig ist der hohe Bauraumbedarf einer solchen Rückholeinrichtung; insbesondere zum einen im Hinblick auf den großen Durchmesser, der durch den großen Gewindeaußendurchmesser bedingt ist, und zum anderen hinsichtlich der großen Länge aufgrund der großen Gewindesteigung (d.h. den Abstand zwischen benachbarten Gewindespitzen). Je größer die Gewindesteigung, desto mehr Windungen muss die Spule aufweisen, um eine identische Länge des Rückholelementes aufnehmen zu können.

Das von der Erfindung zu lösende Problem besteht darin, eine möglichst kompakte Rückholeinrichtung zu schaffen.

Dieses Problem wird durch die Rückholeinrichtung mit den Merkmalen des Anspruchs 1 gelöst.

Danach wird eine Rückholeinrichtung bereitgestellt, mit
- mindestens einem aufwickelbaren Rückholelement;
- einer drehbaren Aufnahme zum Aufwickeln des Rückholelementes; und
- einer Führungseinrichtung zum Führen des Rückholelementes beim Aufwickeln auf die Aufnahme, wobei
- die Führungseinrichtung so angeordnet und ausgebildet ist, dass sie relativ zu der Aufnahme entlang einer Rotationsachse der Aufnahme bewegbar ist.

Die erfindungsgemäße Rückholeinrichtung ist nach Montage an einer Gassackanordnung insbesondere über das Rückholelement, das z.B. in Form eines Rückholseiles ausgebildet ist, mit dem Gassack der Gassackanordnung verbunden. Beispielsweise ist ein Ende des Rückholelementes an dem Gassack festgelegt und ein anderes Ende an der Aufnahme der Rückholeinrichtung. Somit wird das Rückholelement beim Entfalten des Gassacks gestreckt (insbesondere gespannt) und kann zu einem Zeitpunkt nach Aktivieren des Gassacks durch eine Rotation der Aufnahme in einer Aufwickelrichtung auf die (insbesondere in Form einer Spule ausgebildeten) Aufnahme aufgewickelt werden. Die Führungseinrichtung ermöglicht insbesondere ein regelmäßiges und dichtes Aufwickeln des Rückholelementes und damit eine möglichst kompakte Ausführung der Rückholeinrichtung.

Es wird darauf hingewiesen, dass die Erfindung natürlich nicht auf die Verwendung nur eines Rückholelementes begrenzt ist. Vielmehr können auch mehrere Rückholelemente vorgesehen sein, die z.B. gemeinsam in der Führungseinrichtung verlaufen.

Gemäß einer Ausgestaltung der Erfindung ist die Führungseinrichtung rotierbar mit der Aufnahme verbunden, d.h. die Verbindung der Führungseinrichtung mit der Aufnahme lässt eine Rotation der Führungseinrichtung relativ zu der Aufnahme (oder umgekehrt) zu. Eine derartige Verbindung der Führungseinrichtung mit der Aufnahme wird beispielsweise dadurch realisiert, dass die (z.B. zylindrisch ausgebildete) Aufnahme ein Außengewinde und die (z.B. ringartig ausgebildete) Führungseinrichtung ein Innengewinde aufweist, das mit dem Außengewinde in Eingriff steht. Insbesondere ist die Führungseinrichtung so angeordnet und ausgebildet, dass sie sich bei einer Rotation der Aufnahme in Aufwickelrichtung längs der Rotationsachse (Längsachse) der Aufnahme bewegt. Aufgrund der Längsbewegung der Führungseinrichtung wird das Rückholelement z.B. möglichst gleichmäßig um eine Außenseite der Aufnahme herum abgelegt.

Beispielsweise ist die Führungseinrichtung so angeordnet und ausgebildet, dass sie relativ zu einem die Aufnahme umgebenden Gehäuse der Rückholeinrichtung zumindest nicht in Aufwickelrichtung rotierbar ist. Eine Rotation der Aufnahme in Aufwickelrichtung hat somit nicht auch eine Rotation der Führungseinrichtung in Aufwickelrichtung zur Folge. Vielmehr wird die Aufnahme relativ zur Führungseinrichtung rotieren und dabei (insbesondere über die oben erwähnte Gewindeverbindung) die Bewegung der Führungseinrichtung längs der Rotationsachse der Aufnahme erzeugen.

Denkbar ist, dass die Führungseinrichtung einen Führungsabschnitt aufweist, der eine Öffnung des Gehäuses durchgreift, wobei bei einer Rotation der Aufnahme ein Rand der Öffnung an der Führungseinrichtung zur Anlage kommt und die Rotation der Führungseinrichtung blockiert. Die Öffnung erstreckt sich insbesondere entlang der Längsachse der Aufnahme (z.B. über einen Großteil der Länge oder über die gesamte Länge der Aufnahme), um die erwähnte Bewegung der Führungseinrichtung entlang der Rotationsachse der Aufnahme zu ermöglichen.

Die Führungseinrichtung bewegt sich bei einer Rotation der Aufnahme in Aufwickelrichtung insbesondere so längs der Rotationsachse der Aufnahme, dass das Rückholelement in dem Außengewinde der Aufnahme abgelegt wird. Auf diese Weise kann eine besonders regelmäßige Ablage des Rückholelementes an der Aufnahme und damit ein möglichst vollständiges und zügiges Einholen des Rückholelementes erreicht werden.

Nach einer anderen Weiterbildung der Erfindung weist die Aufnahme sowohl das oben bereits erwähnte Außengewinde als auch einen Bereich ohne Außengewinde auf, wobei der Bereich ohne Außengewinde eine Bewegung der Führungseinrichtung entlang der Längsachse der Aufnahme begrenzt. Insbesondere befindet sich der Bereich ohne Außengewinde an einem Ende der Aufnahme, auf das sich die Führungseinrichtung bei einer Rotation der Aufnahme in Aufwickelrichtung zu bewegt.

Insbesondere ist die Rückholeinrichtung so ausgebildet, dass die Aufnahme relativ zu der Führungseinrichtung frei drehbar ist, wenn sich die Führungseinrichtung in dem Bereich der Aufnahme befindet. Die Führungseinrichtung wird, wenn sie sich in dem Bereich der Aufnahme ohne Außengewinde befindet, also nicht mehr entlang der Rotationsachse der Aufnahme bewegt. Daher wird das Rückholelement in diesem Zustand der Rückholeinrichtung nunmehr ungeordnet auf die Aufnahme aufgewickelt, insbesondere in mehreren Lagen (insbesondere unterhalb der Führungseinrichtung, d.h. auf einer der Rückholmechanik zugewandten Seite der Führungseinrichtung). Der Bereich der Aufnahme ohne Außengewinde ist zudem insbesondere so beschaffen, dass sich die Führungseinrichtung aus dem Bereich ohne Außengewinde nicht mehr zurück in den Bereich mit Außengewinde bewegen kann.

Beispielsweise ist der Außendurchmesser zumindest des Bereichs der Aufnahme kleiner als ein Innendurchmesser der Führungseinrichtung, um die freie Drehbarkeit der Aufnahme zu ermöglichen. Des Weiteren ist die Rückholeinrichtung so ausgebildet, dass die Führungseinrichtung beabstandet zu dem Gehäuse angeordnet ist, wenn diese sich in dem Bereich der Aufnahme befindet, d.h. es befindet sich ein Spalt zwischen der Führungseinrichtung und einer Innenseite des Gehäuses.

Insbesondere befindet sich der Bereich ohne Außengewinde an einem einem Stirnseitenabschnitt des Gehäuses zugewandten (d.h. der Rückholmechanik abgewandten) Ende der Aufnahme, wobei die Führungseinrichtung beabstandet zu einer Innenseite des Stirnseitenabschnitts des Gehäuses angeordnet ist, wenn sie sich in dem Bereich ohne Außengewinde befindet.

Die erfindungsgemäße Rückholeinrichtung umfasst des Weiteren z.B. eine Rückstellkrafterzeugungseinrichtung zum Ausüben einer Rückstellkraft auf das Rückholelement. Insbesondere erzeugt die Rückstellkrafterzeugungseinrichtung ein Drehmoment auf die Aufnahme, wodurch die Rückstellkraft in das Rückholelement eingeleitet wird. Beispielsweise weist die Rückstellkrafterzeugungseinrichtung mindestens ein mit der Aufnahme zusammenwirkendes elastisches Element (z.B. in Form einer Feder, etwa einer Spiralfeder) auf, mit dem ein in Aufwickelrichtung auf die Aufnahme wirkendes Drehmoment erzeugbar ist. Insbesondere wird nach einem Strecken des Rückholelementes (durch Aufblasen des Gassacks) durch die Aufnahme entgegen der Aufwickelrichtung rotiert, was zu einer Spannung des elastischen Elementes und damit zu einem Drehmoment entgegen der Aufwickelrichtung auf die Aufnahme führt.

Darüber hinaus kann eine Sperrvorrichtung vorgesehen sein, die aus einer Sperrstellung, in der sie einer Rotation der Aufnahme in Aufwickelrichtung entgegenwirkt, in eine Freigabestellung, in der sie einer Rotation der Aufnahme in Aufwickelrichtung nicht entgegenwirkt, bewegt werden kann. Insbesondere geht die Sperrvorrichtung in die Freigabestellung über, wenn ein Drehmoment entgegen der Aufwickelrichtung auf die Aufnahme wirkt, das einen vorgebbaren Mindestwert übersteigt. Beispielsweise umfasst die Sperrvorrichtung eine Sperrklinke, die zunächst in Eingriff mit der Aufnahme oder mit einem mit der Aufnahme zusammenwirkenden Bauteil steht. Um die Sperrklinke und damit die Sperrvorrichtung in die Freigabestellung zu überführen, muss eine vorgebbare Kraft auf die Sperrklinke ausgeübt werden.

Beispielsweise übt das elastische Element der Rückstellkrafterzeugungseinrichtung in einem Ausgangszustand der Rückholeinrichtung ein Drehmoment in Aufwickelrichtung auf die Aufnahme aus, wobei eine Rotation der Aufnahme in Aufwickelrichtung jedoch zunächst durch die Sperrvorrichtung gesperrt ist. So ist die Aufnahme insbesondere bereits vor dem Aufblasen eines mit dem Rückholelement verbundenen Gassacks vorgespannt. Diese Vorspannung der Aufnahme bewirkt nach Bewegen der Sperrvorrichtung in die Freigabestellung eine Rotation der Aufnahme in Aufwickelrichtung, wodurch auch ein Abschnitt des Rückholelementes, der vor dem Aktivieren des Gassacks nicht auf der Aufnahme aufgewickelt war, an der Aufnahme abgelegt wird.

Die Erfindung betrifft auch eine Gassackanordnung für eine Fahrzeuginsassen-Rückhaltevorrichtung eines Kraftfahrzeuges mit einer wie oben beschriebenen Rückholeinrichtung.

Die Gassackanordnung umfasst insbesondere einen Gassack, der zum Schutz einer fahrzeugexternen Person entlang einer Außenseite (z.B. entlang einer Windschutzscheibe) des Fahrzeugs entfaltbar ist. Des Weiteren ist die Rückholeinrichtung der Gassackanordnung z.B. zum Zurückholen eines mit dem Gassack gekoppelten Rückholelementes (etwa eines Rückholbandes) ausgebildet.

Die Erfindung wird im Folgenden anhand von Ausführungsbeispielen unter Bezugnahme auf die Figuren näher erläutert. Es zeigen:
- Fig. 1: eine Draufsicht einer an einem Kraftfahrzeug angeordneten erfindungsgemäßen Gassackanordnung nach dem Aufblasen ihres Gassacks;
- Fig. 2: eine isometrische Ansicht einer vollständig montierten Rückholeinrichtung gemäß einem Ausführungsbeispiel der Erfindung;
- Fig. 3: die Einzelteile der Rückholeinrichtung aus Fig. 2 in einer isometrischen Explosionsdarstellung ;
- Fig. 4: die teilweise montierte Rückholeinrichtung aus den Fig. 2 und 3 in einer isometrischen Ansicht;
- Fig. 5: ein Schnitt durch die Rückholeinrichtung entlang der Linie V-V in Fig. 2;
- Fig. 6: Komponenten der Rückholeinrichtung der vorhergehenden Figuren in einer isometrischen Ansicht;
- Fig. 7: einen Teilschnitt durch die ein einziges Rückholseil aufweisende Rückholeinrichtung der vorhergehenden Figuren; und
- Fig. 8: einen Teilschnitt durch eine Rückholeinrichtung gemäß einem weiteren Ausführungsbeispiel der Erfindung, wobei die Rückholeinrichtung zwei Rückholseile umfasst.

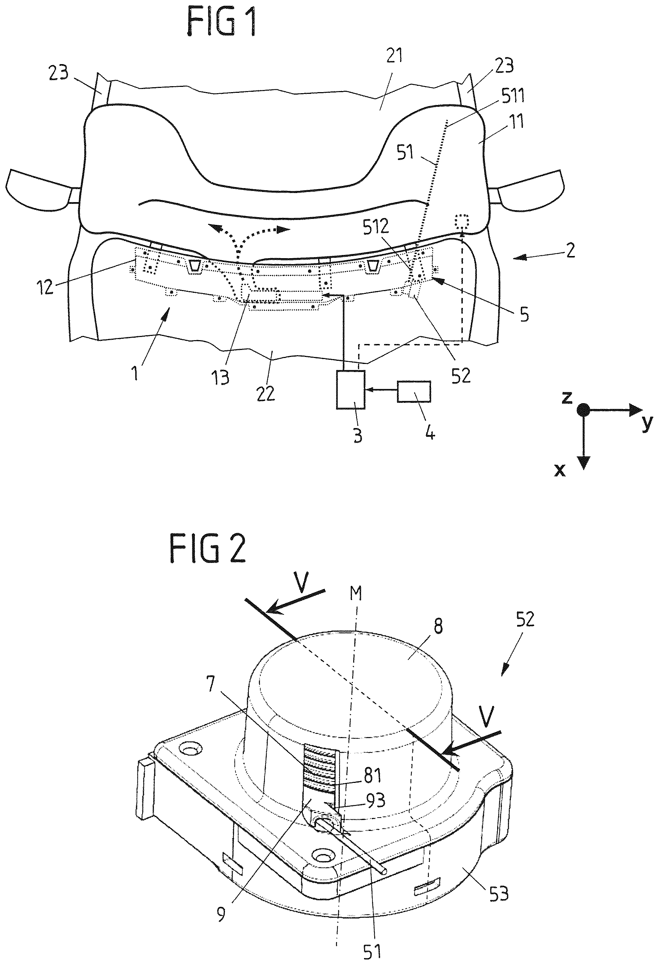

Die in Fig. 1 in Draufsicht dargestellte Gassackanordnung 1 eines Kraftfahrzeuges 2 umfasst einen Gassack 11, der in dem in Fig. 1 gezeigten aufgeblasenen Zustand einen Teil einer Frontscheibe 21 des Fahrzeugs 2 abdeckt. Bei dem Gassack 11 handelt es sich somit um einen sich entlang einer Außenseite des Fahrzeugs 2 erstreckenden Gassack zum Schutz einer fahrzeugexternen Person (etwa einem Fußgänger).

Die Gassackanordnung 1 weist des Weiteren ein unterhalb einer Motorhaube 22 des Fahrzeugs 2 angeordnetes Gassackmodulgehäuse 12 auf, aus dem heraus sich der Gassack 11 in Richtung auf die Frontscheibe 21 entfaltet hat. Zum Aufblasen des Gassacks 11 weist die Gassackanordnung 1 zudem einen innerhalb des Modulgehäuses 12 befindlichen Gasgenerator 13 auf, der in einen Einblasbereich des Gassacks 11 hineinragt.

Das Aufblasen des Gassacks 11 über den Gasgenerator 13 erfolgt in Abhängigkeit eines Steuersignals einer ECU 3 (Electronic Control Unit - elektronische Steuereinheit) des Fahrzeugs 2, wobei über Sensoren 4 erfasste Parameter bzgl. des Fahrzeugzustandes bzw. der Fahrzeugumgebung von der ECU 3 verarbeitet werden. Werden im Fall einer unmittelbar bevorstehenden oder bereits begonnenen Kollision mit einer außerhalb des Fahrzeugs 2 befindlichen Person ermittelte oder hinterlegte Schwell- bzw. Grenzwertewerte überschritten, erzeugt die ECU 3 zur Aktivierung des Gasgenerators 13 ein Steuersignal, worauf der Gassack 11 durch die durch den Gasgenerator 13 erzeugten Gase aufgeblasen wird.

Ein eine bei einer Kollision auf das Fahrzeug 2 aufprallende Person schützender Bereich des Gassackes 11 (der Schutzbereich des Gassacks 11, d.h. insbesondere derjenige Bereich des Gassacks 11, der sich über die Frontscheibe 21 und einen der Frontscheibe 21 zugewandten Abschnitt der Motorhaube 22 und die sonstige vordere Fahrzeugkarosserie erstreckt) befindet sich z.B. vollkommen außerhalb des durch die Motorhaube 22 abgedeckten Motorraums. Der Schutzbereich des Gassacks 11 deckt insbesondere den unteren Bereich der Frontscheibe 21 sowie z.B. auch Bereiche der an die Frontscheibe 21 angrenzenden beiden A-Säulen 23 des Fahrzeugs 2 ab.

Des Weiteren weist die Gassackanordnung 1 eine erfindungsgemäße Rückholeinrichtung 5 zum Bewegen des aufgeblasenen Gassacks 11 aus dem Sichtfeld insbesondere eines Fahrzeugführers heraus auf. Die Rückholeinrichtung 5 ist vorliegend auf der Fahrerseite angeordnet (alternativ oder zusätzlich auch auf der Beifahrerseite möglich) und soll nach der Entfaltung des Gassackes 11 und dem eventuellen Aufprall einer Person die Sicht nach vorn, speziell für den Fahrzeugführer, wieder ermöglichen.

Die Rückholeinrichtung 5 ist selbststeuernd ausgelegt und wird über den sich entfaltenden Gassack 11 aktiviert. Hierfür umfasst die Rückholeinrichtung 5 ein Rückholelement in Form eines Rückholseiles 51, das mit einem ersten Ende 511 an dem Gassack 11 festgelegt ist (und zwar insbesondere an dessen der Frontscheibe 21 zugewandten Seite). Das zweite Ende 512 des Rückholseiles 51 ist mit Rückstellkrafterzeugungsmitteln in Form einer (z.B. im Modulgehäuse 12 angeordneten oder mit dem Modulgehäuse 12 verbundenen) Rückholmechanik 52 gekoppelt und über die Rückholmechanik 52 mit dem Fahrzeug 2 verbunden.

Das Zurückholen des Gassacks 11 (d.h. das Bewegen des aufgeblasenen Gassacks 11 aus dem Sichtfeld des Fahrzeugführers) erfolgt, wenn der Gassackinnendruck absinkt; insbesondere, wenn der Gassackinnendruck unter einen vorbestimmbaren Wert fällt, bei dem eine durch die Rückholmechanik 52 über das Rückholseil 51 in den Gassack 11 eingeleitete Kraft größer ist als eine Kraft in entgegengesetzter Richtung, die auf den Gassackinnendruck zurückgeht.

Das Reduzieren des Gassackinnendrucks kann sowohl passiv (insbesondere über Leckagen, z.B. permanente oder sich öffnende, selbstadaptive Abströmöffnungen im Gassack) als auch aktiv erfolgen. Ein aktives Reduzieren des Gassackinnendrucks wird z.B. dadurch realisiert, dass die Gassackanordnung 1 eine Druckreduzierungsvorrichtung (nicht dargestellt) zum Reduzieren des Innendruckes des aufgeblasenen Gassacks aufweist, die über ein Steuersignal der ECU 3 aktiviert wird und beispielsweise eine Abströmöffnung freigibt oder ein Kühlmittel einsprüht. Durch ein Absenken des Gassackinnendrucks wird ein Bewegen des Gassacks 11 aus dem Sichtfeld eines Fahrzeuginsassen heraus mit Hilfe der Rückholeinrichtung 5 vereinfacht und beschleunigt, da die Rückholmechanik 52 der Rückholeinrichtung 5 gegen einen geringeren Gassackinnendruck arbeiten muss. Das Aktivieren der Druckreduzierungsvorrichtung kann z.B. zu einem bestimmten Zeitpunkt nach der Aktivierung des Gasgenerators 13 erfolgen. Denkbar ist allerdings auch, dass die Druckreduzierungsvorrichtung in Abhängigkeit von anderen, durch Sensoren erfassten Parametern (z.B. bezüglich eines registrierten Aufpralls einer Person) aktiviert wird.

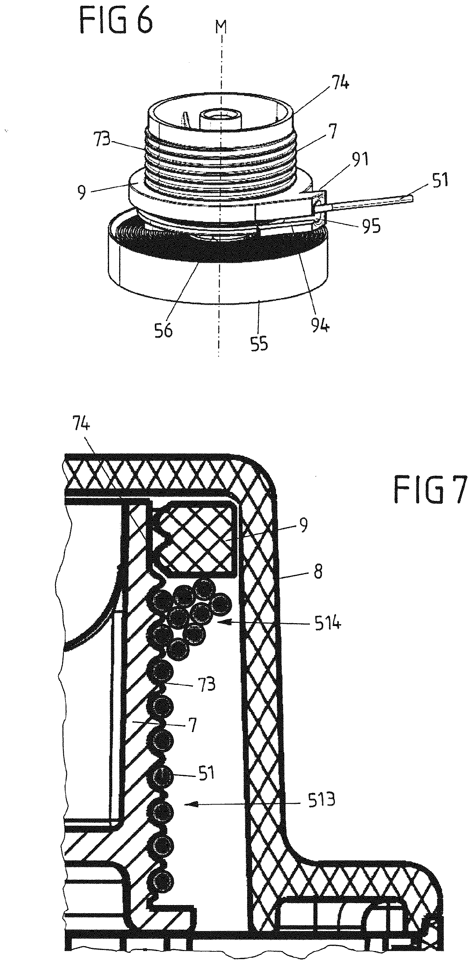

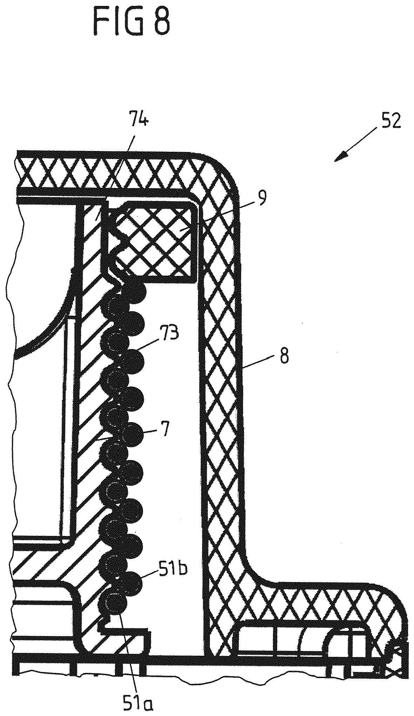

Nachfolgend wird die Rückholmechanik 52 der erfindungsgemäßen Rückholeinrichtung 51 genauer beschrieben, wobei im Zusammenhang mit den Fig. 2 bis 6 der Aufbau der Rückholmechanik 52 und anhand der Fig. 7 und 8 ihre Funktion erläutert wird.

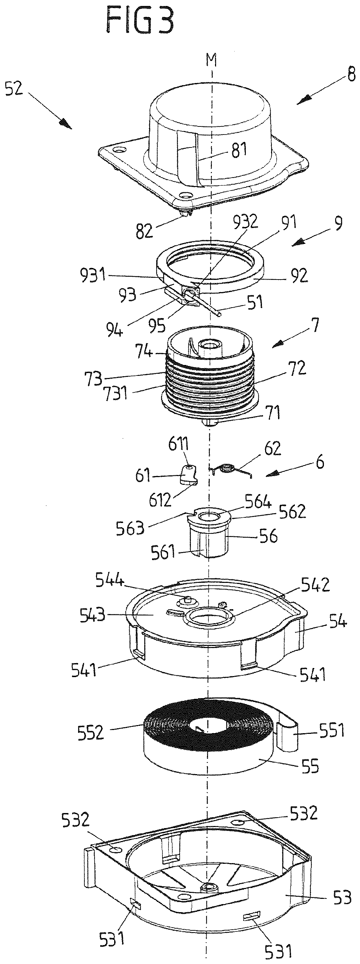

Wie sich insbesondere aus der Explosionsdarstellung der Fig. 3 ergibt, umfasst die Rückholmechanik 52 eine Federkassette 53, die gemeinsam mit einem Federgehäuseoberteil 54 ein Gehäuse mit einem Unterbringungsraum für ein elastisches Element in Form einer Rückholfeder 55 bildet. Die Rückholfeder 55 ist nach Art einer Spiralfeder ausgebildet. Das Federgehäuseoberteil 54 ist über eine Verrastung mit der Federkassette 53 verbunden, wobei Rasthaken 541 am Federgehäuseoberteil 54 in Durchbrüche 531 in einer Wandung der Federkassette 53 eingreifen. In dem aus der Federkassette 53 und dem Federgehäuseoberteil 54 gebildeten Gehäuse ist die Rückholfeder 55 angeordnet, wobei ein erstes (äußeres) Ende 551 der Rückholfeder 55 fest mit der Federkassette 53 und/oder dem Federgehäuseoberteil 54 verbunden ist.

Ein zweites (inneres) Ende 552 der Rückholfeder 55 greift in einen Fixierschlitz 561 einer Hülse 56 ein, welche um eine Achse (Rotationsachse) drehbar in dem aus der Federkassette 53 und dem Federgehäuseoberteil 54 gebildeten Gehäuse gelagert ist. Insbesondere durchgreift die Hülse 56 im zusammengebauten Zustand der Rückholmechanik 52 eine Öffnung 542 in einer Oberseite 543 des Federgehäuseoberteils 54. Bei Rotation der Hülse 56 gegen den Uhrzeigersinn wird die Rückholfeder 55 durch Mitnahme ihres zweiten Endes 552 gespannt, wodurch sich ein im Uhrzeigersinn (d.h. in Aufwickelrichtung) wirkendes Drehmoment aufbaut.

An einem aus dem Federgehäuseoberteil 54 herausragenden Ende weist die Hülse 56 einen Bund 562 auf, welcher parallel zur Oberseite 543 des Federgehäuseoberteils 54 verläuft und der an einem seitlichen Rand mit einem Ausschnitt 563 (Einbuchtung) versehen ist. Ebenfalls an der Oberseite 543 des Federgehäuseoberteils 54 befindet sich eine Sicherungsklinke 61 einer Sperrvorrichtung 6. Die Sicherungsklinke 61 ist schwenkbar mit dem Federgehäuseoberteil 54 verbunden, wobei ein eine Schwenkachse festlegender, kreiszylinderförmigen Fortsatz 544 der Oberseite 543 des Federgehäuseoberteils 54 eine Öffnung 611 der Sicherungsklinke 61 durchgeift. Diese Befestigung ermöglicht eine Schwenkbewegung der Sicherungsklinke 61 parallel zur Oberseite 543 des Federgehäuseoberteils 54, wobei eine Schwenkbewegung entgegen dem Uhrzeigersinn gegen die Rückstellkraft einer ebenfalls an der Oberseite 543 des Federgehäuseoberteils 54 angeordneten Feder (Schenkelfeder 62) erfolgt.

An ihrem der Öffnung 611 abgewandten Ende weist die Sicherungsklinke 61 einen dem Bund 562 der Hülse 56 zugewandten nasenförmigen Vorsprung 612 auf. Zum Halten der Rückholfeder 55 in einem vorgespannten Zustand (mit einem definierten Rückstelldrehmoment), in den sie wie oben beschrieben durch Drehen der Hülse 56 gebracht werden kann, wird die Sicherungsklinke 61 entgegen dem Uhrzeigersinn auf die Hülse 56 zu verschwenkt und der nasenförmige Vorsprung 612 mit dem Ausschnitt 563 im Bund 562 der Hülse 56 in (z.B. form- und kraftschlüssigen) Eingriff gebracht. Die Formgebung des Ausschnitts 563 und des nasenförmigen Vorsprungs 612 sowie das wirkende Drehmoment der gespannten Rückholfeder 55 sind so aufeinander abgestimmt, dass der Eingriff und damit der vorgespannte Zustand der Rückholfeder 55 auch im normalen Fahrbetrieb erhalten bleibt. Die Kraft der Schenkelfeder 62 reicht insbesondere auch beim Auftreten von Erschütterungen nicht aus, um die Sicherungsklinke 61 wieder zurück zu schwenken.

Die Hülse 56 weist auch eine zentrale Öffnung 564 auf, in welche ein zentraler Fortsatz 71 einer Aufnahme in Form einer Spule (Seiltrommel 7) eingreift. Die Seiltrommel 7 und die Hülse 56 sind auf diese Weise drehfest miteinander verbunden, wobei sich die Seiltrommel 7 und die Hülse 56 um eine gemeinsame Rotationsachse relativ zu der Federkassette 53, dem Federgehäuseoberteil 54 und einem Seiltrommelgehäuse 8, in dem die Seiltrommel 7 angeordnet ist, drehen können. Die Rotationsachse wird vorliegend durch eine Mittelachse M der kreiszylinderförmigen Seiltrommel 7 bzw. der Hülse 56 gebildet.

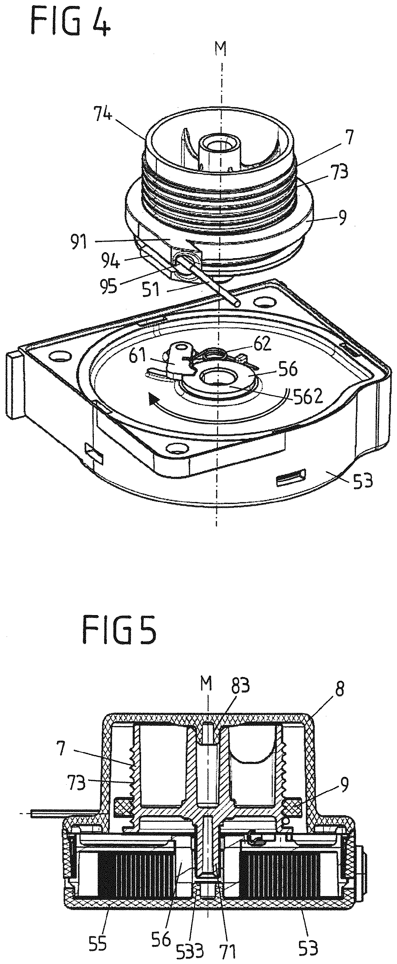

Die Lagerung des Verbundes aus der Seiltrommel 7 und der Hülse 56 erfolgt über einen der Hülse 56 abgewandten Endbereich der Seiltrommel 7 bzw. einen der Seiltrommel 7 abgewandten Endbereich der Hülse 56, insbesondere über einen Zapfen 83 des Seiltrommelgehäuses 8 und einem Zapfen 533 der Federkassette 53 (vgl. Fig. 5), die in einen (hohlen) Abschnitt der Seiltrommel 7 bzw. der Hülse 56 eingreifen.

Die Seiltrommel 7 ist im Bereich ihrer Mantelfläche 72 über den größten Teil ihrer Länge (entlang der Mittelachse M) mit einer spiralförmig umlaufenden Nut 731 (etwa eine Rille oder ein Einkerbung) versehen, die ein (vorliegend rechtssteigendes) Außengewinde 73 ausbildet. Beispielsweise ist das Gewinde 73 als Rundgewinde ausgebildet. An ihrem der Hülse 56 abgewandten Ende (entlang der Rotationsachse betrachtet) ist die Seiltrommel 7 mit einem Gewindeauslauf 74 versehen, d.h. mit einem Bereich der Mantelfläche 72, der kein Gewinde aufweist.

Die Rückholeinrichtung 5 weist des Weiteren eine Führungseinrichtung in Form einer Seilführung 9 auf, die über ein Innengewinde 91 drehbar mit dem Außengewinde 73 der Seiltrommel 7 verbunden ist. In Blickrichtung parallel zur Rotationsachse (d.h. zur Mittelachse M) weist die Seilführung 9 einen tangential von einem kreisringförmigen Abschnitt 92 abragenden Führungsabschnitt 93 auf. Das Rückholseil 51 der Rückholeinrichtung 5 ist in den Führungsabschnitt 93 eingelegt, wobei der Führungsabschnitt 93 entlang seiner Erstreckungsrichtung mit einem Durchgangskanal 95 versehen ist, der zwei stirnseitige Öffnungen 931, 932 ausbildet, wobei das Rückholseil 51 durch die Öffnung 931 in den Durchgangskanal 95 ein- und über die andere Öffnung 932 aus dem Durchgangskanal 95 austritt. Zum Einlegen des Rückholseils 51 in den Durchgangskanal 95 weist der Führungsabschnitt 93 einen sich längs des Führungsabschnitts 93 erstreckenden Einführschlitz 94 auf. Das Rückholseil 51 ist mit einem Ende an der Seiltrommel 7 (insbesondere an einem der Hülse 56 zugewandten Bereich der Seiltrommel 7) festgelegt.

Der Führungsabschnitt 93 durchragt im zusammengesetzten Zustand der Rückholmechanik 52 eine Öffnung in Form eines Führungsschlitzes 81 in einer Wandung des Seiltrommelgehäuses 8. Der Führungsschlitz 81 verläuft in seiner Längserstreckung zumindest annähernd parallel zur Mittelachse M und insbesondere zumindest näherungsweise über die gesamte Länge der Seiltrommel 7. Das Anordnen des Führungsabschnitts 93 in dem Führungsschlitz 81 blockiert eine Rotation der Seilführung 9 relativ zu dem Seiltrommelgehäuse 8. Die längliche Ausgestaltung des Führungsschlitzes 81 lässt jedoch eine Bewegung der Seilführung 9 entlang der Rotationsachse der Seiltrommel 7 zu.

Befindet sich die erfindungsgemäße Rückholeinrichtung 5 in ihrem Ausgangszustand (d.h. insbesondere vor Aktivieren der Gassackanordnung, wobei die Rückholmechanik 52 nicht aktiviert, die Rückholfeder 55 jedoch vorgespannt ist) steht das Außengewinde 73 der Seiltrommel mit dem Innengewinde 91 der Seilführung 9 miteinander im Eingriff, d.h. die Seilführung 9 ist auf die Seiltrommel 7 aufgeschraubt.

Ein Teil des Rückholseils 51 ist im vorliegenden Ausführungsbeispiel im Ausgangszustand der Rückholeinrichtung 5 bereits auf der Seiltrommel 7 aufgewickelt (z.B. mindestens eine halbe Windung) und in der spiralförmig umlaufenden Nut 731 (Gewinderille, Gewindegang) des Außengewindes 73 angeordnet. Die Seilführung 9 ist an dem der Hülse 56 zugewandten Ende der Seiltrommel 7 positioniert, wobei der Abstand zur Hülse 56 von der auf der Seiltrommel 7 aufgewickelten Länge des Rückholseils 51 abhängt.

Das Seiltrommelgehäuse 8 ist mit der Federkassette 53 verbunden und bildet derart eine äußere Umhüllung der Rückholmechanik. Vorliegend ist das Seiltrommelgehäuse 8 mit der Federkassette 53 verrastet, wobei Rasthaken 82 am Seiltrommelgehäuse 8 in Rastöffnungen 532 der Federkassette 53 eingreifen.

Im Ausgangszustand der Rückholeinrichtung 5 ist das Rückholseil 51 bis auf seinen bereits auf der Seiltrommel 7 aufgewickelten Abschnitt zusammen mit dem gefalteten Gassack 11 im Gassackmodulgehäuse 12 verstaut. Nach der Aktivierung des Gasgenerators 13 erfolgt das Aufblasen/Entfalten des Gassackes 11 und eine damit einhergehende gleichzeitige Entfaltung des Rückholseils 51. Die Länge des Rückholseils 51 ist so bemessen, dass es vor der vollständigen Entfaltung des Gassackes 11 seinen vollkommen gestreckten (gespannten) Zustand erreicht.

Mit fortschreitender Entfaltung des Gassackes 11 wird über das Rückholseil 51 eine Kraft in die Seiltrommel 7 der Rückholmechanik 52 eingeleitet, die über den Radius der Seiltrommel 7 ein Drehmoment erzeugt, welches entgegengesetzt zu dem Rückstelldrehmoment gerichtet ist, das durch die Rückholfeder 55 in die Seiltrommel 7 eingeleitet wird. Bei Überschreiten des von der Rückholfeder 55 erzeugten Rückstelldrehmoments R (vgl. Fig. 4), wird die Seiltrommel 7 und die mit ihr verbundene Hülse 56 entgegen dem Uhrzeigersinn verdreht, wobei die Rückholfeder 55 (z.B. nur um ein geringes Maß) weiter gespannt wird. Des Weiteren wird durch das Drehen der Seiltrommel 7 entgegen der Aufwickelrichtung (entgegen dem Rückstelldrehmoment R) die insbesondere form- und kraftschlüssige Verbindung zwischen der Sicherungsklinke 61 und dem Bund 562 der Hülse 56 aufgehoben. Die Schenkelfeder 62 verschwenkt die Sicherungsklinke 61 im Uhrzeigersinn, d.h. von der Hülse 56 weg.

Sinkt nun der Gassackinnendruck, nimmt auch die über das Rückholseil 51 in die Seiltrommel 7 eingeleitete Kraft ab, so dass sich die Rückholfeder 55 entspannen wird. Das von ihr beim Entspannen erzeugte Drehmoment wird über die Hülse 56 auf die Seiltrommel 7 übertragen, wodurch die nicht mehr blockierte Seiltrommel 7 in Rotation (in Aufwickelrichtung) versetzt und das durch die Seilführung 9 geführte Rückholseil 51 auf die Seiltrommel 7 aufgewickelt wird. Da die über die Gewinde 73, 91 mit der Seiltrommel 7 in Eingriff stehende Seilführung 9 durch ihre Führung im Seiltrommelgehäuse 8 wie oben beschrieben an einer Verdrehung relativ zu dem Seiltrommelgehäuse 8 gehindert ist, wird sie entlang der Rotationsachse (der Mittelachse M) entsprechend der Steigung des Gewindes 73, 91 zum anderen Ende der Seiltrommel 7 bewegt (Vortrieb), wodurch das in der Seilführung 9 geführte Rückholseil 51 gleichmäßig (geordnet) in der Nut 731 des Außengewindes 73 abgelegt wird (vgl. Fig. 7, geordneter Seilabschnitt 513).

Erreicht die Seilführung 9 den oberen Bereich der Seiltrommel 7 ohne Außengewinde (d.h. den Gewindeauslauf 74), wird der Gewindeeingriff zwischen der Seilführung 9 und der Seiltrommel 7 aufgehoben und die Bewegung der Seilführung 9 entlang der Rotationsachse der Seiltrommel 7 gestoppt. Die Seiltrommel 7 kann sich nun relativ zur Seilführung 9 verdrehen, ohne diese voranzutreiben. Hat sich die Rückholfeder 55 noch nicht vollständig entspannt und steht außerhalb der Rückholmechanik 52 noch Rückholseil 51 zur Verfügung, wird dieses nun ungeordnet auf die Seiltrommel 7 aufgewickelt (Seilabschnitt 514).

Das ungeordnete Aufwickeln des Rückholseils 51 findet in einer Endphase der Rückholung des Gassacks 11 statt. Ein gleichmäßiges Aufwickeln des Rückholseils 51 ist in dieser Phase nicht zwingend erforderlich, da der Gassack 11 (durch das zunächst gleichmäßige Aufwickeln des Rückholseils 51) bereits nahezu vollständig aus dem Sichtfeld des Fahrzeugführers entfernt wurde und zwischen der Seiltrommel 7 und einer Innenwand des Seiltrommelgehäuses 8 genügend Raum zur Unterbringung der ungeordnet aufgewickelten Restmenge des Rückholseils 51 zur Verfügung steht. Ein Vorteil dieser Lösung ist insbesondere, dass im Vergleich zu einer gleichmäßigen Aufwicklung über die gesamte Länge der Seiltrommel 7 (in Richtung der Rotationsachse betrachtet) die Seiltrommel 7 mit einer wesentlich geringeren Bauhöhe realisiert werden kann, da für einen Teil des Rückholseiles 51 ein Bereich der Seiltrommel 7 genutzt wird, welcher bereits für die Unterbringung der regelmäßigen Wicklungen verwendet wurde. Denkbar ist allerdings durchaus, dass auf den Gewindeauslauf 74 verzichtet wird, um ein gleichmäßiges Aufwickeln des Rückholseils 51 über die gesamte Länge zu bewirken.

Die vorangegangenen Darlegungen im Zusammenhang mit der Rückholung und Aufwicklung eines einzigen Rückholseil 51 durch die Rückholmechanik 52 gelten analog für eine Ausgestaltung der Rückholeinrichtung, bei denen mehrere Rückholseile durch die Rückholmechanik aufgewickelt werden. Auch bei einer derartigen Ausgestaltung der Rückholeinrichtung ist z.B. eine einzelne Seilführung 9 vorhanden, welche im Vergleich zu der Variante mit nur einem Rückholseil konstruktiv an die Anzahl der zu führenden Rückholseile angepasst wurde.

Fig. 8 zeigt einen Teilschnitt durch eine Rückholmechanik mit zwei aufgewickelten Rückholseilen 51a, 51b. Die Rückholseile 51a, 51b sind hier in zwei Lagen aufgewickelt, wobei die zweite (äußere) Lage in Zwischenräumen zwischen den Windungen der ersten Lage abgelegt (aufgewickelt) wird. Obwohl dies in der Figur 8 nicht dargestellt ist, ist auch ein ungeordnetes Aufwickeln jeweils eines Restabschnitts der Rückholseile 51a, 51b möglich. Die Beschreibung bezüglich der Fig. 7 hier analog.

Es wird darauf hingewiesen, dass sich die oben erwähnten Richtungsangaben "im Uhrzeigersinn" und "entgegen dem Uhrzeigersinn" auf eine Sicht entlang der Rotationsachse ausgehend von dem Seiltrommelgehäuse 8 in Richtung der Federkassette 73 beziehen. Es wird auch darauf hingewiesen, dass die Rückholmechanik 52 natürlich auch so ausgelegt sein kann, dass bei einem Spannen des Rückholseiles 51 eine Rotation der Seiltrommel 7 im Uhrzeigersinn erfolgt.

### Bezugszeichenliste

- 1: Gassackanordnung
- 2: Fahrzeug
- 3: ECU
- 4: Sensor
- 5: Rückholeinrichtung
- 6: Sperrvorrichtung
- 7: Seiltrommel
- 8: Seiltrommelgehäuse
- 9: Seilführung
- 11: Gassack
- 12: Gassackmodulgehäuse
- 13: Gasgenerator
- 21: Frontscheibe
- 22: Motorhaube
- 23: A-Säule
- 51, 51a, 51b: Rückholseil
- 52: Rückholmechanik
- 53: Federkassette
- 54: Federgehäuseoberteil
- 55: Rückholfeder
- 56: Hülse
- 61: Sicherungsklinke
- 62: Schenkelfeder
- 71: Fortsatz
- 72: Mantelfläche
- 73: Außengewinde
- 74: Gewindeauslauf
- 81: Führungsschlitz
- 82: Rasthaken
- 83: Zapfen
- 91: Innengewinde
- 92: kreisringförmiger Abschnitt
- 93: Führungsabschnitt
- 94: Einführschlitz
- 95: Durchgangskanal
- 511, 512: Ende Rückholseil
- 513: geordnet abgelegter Seilabschnitt
- 514: ungeordnet abgelegter Seilabschnitt
- 531: Durchbruch
- 532: Öffnung
- 533: Zapfen
- 541: Rasthaken
- 542: zentrale Öffnung
- 543: Oberseite
- 544: Fortsatz
- 551: erstes Ende Rückholfeder
- 552: zweite Ende Rückholfeder
- 561: Fixierschlitz
- 562: Bund
- 563: Ausschnitt
- 564: Öffnung
- 611: Öffnung Sicherungsklinke
- 612: Nase
- 731: Nut
- 931, 932: Öffnung

## Patentansprüche

1. Rückholeinrichtung zum Bewegen zumindest eines Teilabschnittes eines entlang einer Außenseite eines Fahrzeugs entfalteten Gassacks aus dem Sichtfeld eines auf einem vorderen Fahrzeugsitz des Fahrzeugs befindlichen Fahrzeuginsassen, mit
- mindestens einem aufwickelbaren Rückholelement (51, 51a, 51b);
- einer drehbaren Aufnahme (7) zum Aufwickeln des Rückholelementes (51, 51a, 51b); und
- einer Führungseinrichtung (9) zum Führen des Rückholelementes (51, 51a, 51b) beim Aufwickeln auf die Aufnahme (7),
**dadurch gekennzeichnet, dass**
die Führungseinrichtung (9) so angeordnet und ausgebildet ist, dass sie relativ zu der Aufnahme (7) entlang einer Rotationsachse der Aufnahme (7) bewegbar ist.

2. Rückholeinrichtung nach Anspruch 1, **dadurch gekennzeichnet, dass** die Führungseinrichtung (9) rotierbar mit der Aufnahme (7) verbunden ist.

3. Rückholeinrichtung nach Anspruch 2, **dadurch gekennzeichnet, dass** die Aufnahme (7) ein Außengewinde (73) und die Führungseinrichtung (9) ein Innengewinde (91) aufweist, das mit dem Außengewinde (73) in Eingriff steht.

4. Rückholeinrichtung nach einem der vorherigen Ansprüche, **dadurch gekennzeichnet, dass** die Führungseinrichtung (9) so angeordnet und ausgebildet ist, dass sie sich bei einer Rotation der Aufnahme (7) in Aufwickelrichtung längs der Rotationsachse der Aufnahme bewegt.

5. Rückholeinrichtung nach Anspruch 4, **dadurch gekennzeichnet, dass** die Führungseinrichtung (9) so angeordnet und ausgebildet ist, dass sie relativ zu einem Gehäuse (8) der Rückholeinrichtung zumindest nicht in Aufwickelrichtung rotierbar ist, wobei insbesondere die Führungseinrichtung einen Führungsabschnitt (93) aufweist, der eine Öffnung (81) des Gehäuses (8) durchgreift.

6. Rückholeinrichtung nach Anspruch 4 oder 5 soweit rückbezogen auf Anspruch 2, **dadurch gekennzeichnet, dass** sich die Führungseinrichtung (9) bei einer Rotation der Aufnahme (7) in Aufwickelrichtung so längs der Rotationsachse der Aufnahme (7) bewegt, dass das Rückholelement (51, 51a, 51b) in dem Außengewinde (73) der Aufnahme (7) abgelegt wird.

7. Rückholeinrichtung nach einem der Ansprüche 4 bis 6 soweit rückbezogen auf Anspruch 3, **dadurch gekennzeichnet, dass** die Aufnahme (7) einen Bereich (74) ohne Außengewinde aufweist, der eine Bewegung der Führungseinrichtung (9) entlang der Rotationsachse der Aufnahme (7) begrenzt, wobei die Rückholeinrichtung insbesondere so ausgebildet ist, dass die Aufnahme (7) relativ zu der Führungseinrichtung (9) frei drehbar ist, wenn sich die Führungseinrichtung (9) in dem Bereich (74) der Aufnahme (7) befindet.

8. Rückholeinrichtung nach Anspruch 7, **dadurch gekennzeichnet, dass** der Bereich (74) der Aufnahme (7) so beschaffen ist, dass sich die Führungseinrichtung (9) aus dem Bereich (74) nicht mehr zurück in den Bereich der Aufnahme (7) mit dem Außengewinde (73) bewegen kann.

9. Rückholeinrichtung nach einem der vorherigen Ansprüche, **gekennzeichnet durch** eine Rückstellkrafterzeugungseinrichtung (52) zum Ausüben einer Rückstellkraft auf das Rückholelement (51, 51a, 51b).

10. Rückholeinrichtung nach Anspruch 9, **dadurch gekennzeichnet, dass** die Rückstellkrafterzeugungseinrichtung (52) mindestens ein mit der Aufnahme (7) zusammenwirkendes elastisches Element (55) aufweist, mit dem ein in Aufwickelrichtung auf die Aufnahme (7) wirkendes Drehmoment erzeugbar ist.

11. Rückholeinrichtung nach einem der vorherigen Ansprüche, **gekennzeichnet durch** eine Sperrvorrichtung (6), die aus einer Sperrstellung, in der sie einer Rotation der Aufnahme (7) in Aufwickelrichtung entgegenwirkt, in eine Freigabestellung, in der sie einer Rotation der Aufnahme (7) in Aufwickelrichtung nicht entgegenwirkt, bewegt werden kann, wobei insbesondere die Sperrvorrichtung (6) in die Freigabestellung übergeht, wenn ein Drehmoment entgegen der Aufwickelrichtung auf die Aufnahme (7) wirkt, das einen vorgebbaren Mindestwert übersteigt.

12. Rückholeinrichtung nach den Anspruch 11 und Anspruch 10, **dadurch gekennzeichnet, dass** das elastische Element (55) in einem Ausgangszustand der Rückholeinrichtung (5) ein Drehmoment in Aufwickelrichtung auf die Aufnahme (7) ausübt, wobei eine Rotation der Aufnahme (7) in Aufwickelrichtung jedoch durch die Sperrvorrichtung (6) gesperrt ist.

13. Gassackanordnung für eine Fahrzeuginsassen-Rückhaltevorrichtung eines Kraftfahrzeuges mit einer Rückholeinrichtung (5) gemäß einem der vorhergehenden Ansprüche.

14. Gassackanordnung nach Anspruch 13, **gekennzeichnet durch** einen Gassack (11), der zum Schutz einer fahrzeugexternen Person entlang einer Außenseite des Fahrzeugs (2) entfaltbar ist.

15. Gassackanordnung nach Anspruch 13 oder 14, **dadurch gekennzeichnet, dass** die Rückholeinrichtung (5) zum Zurückholen eines mit dem Gassack (11) gekoppelten Rückholelementes (51) ausgebildet ist.

## Claims

1. Retracting device for moving at least a partial portion of an airbag deployed along an outer side of a vehicle out of the field of view of a vehicle occupant located on a front vehicle seat of the vehicle, with
- at least one retracting element (51, 51a, 51b) which can be wound up;
- a rotatable receptacle (7) for winding up the retracting element (51, 51a, 51b); and
- a guide device (9) for guiding the retracting element (51, 51a, 51b) during winding up thereof onto the receptacle (7),
**characterized in that**
the guide device (9) is arranged and designed in such a manner that it is movable relative to the receptacle (7) along an axis of rotation of the receptacle (7).

2. Retracting device according to Claim 1, **characterized in that** the guide device (9) is connected rotatably to the receptacle (7).

3. Retracting device according to Claim 2, **characterized in that** the receptacle (7) has an external thread (73) and the guide device (9) has an internal thread (91) which is in engagement with the external thread (73).

4. Retracting device according to one of the preceding claims, **characterized in that** the guide device (9) is arranged and designed in such a manner that it moves along the axis of rotation of the receptacle during rotation of the receptacle (7) in the winding-up direction.

5. Retracting device according to Claim 4, **characterized in that** the guide device (9) is arranged and designed in such a manner that it is at least not rotatable relative to a housing (8) of the retracting device in the winding-up direction, wherein in particular the guide device has a guide portion (93) which reaches through an opening (81) in the housing (8).

6. Retracting device according to Claim 4 or 5, if related back to Claim 2, **characterized in that**, during rotation of the receptacle (7), the guide device (9) moves along the axis of rotation of the receptacle (7) in the winding-up direction until the retracting element (51, 51a, 51b) is deposited in the external thread (73) of the receptacle (7).

7. Retracting device according to one of Claims 4 to 6, if related back to Claim 3, **characterized in that** the receptacle (7) has a region (74) without an external thread, said region limiting a movement of the guide device (9) along the axis of rotation of the receptacle (7), wherein the retracting device is designed in particular in such a manner that the receptacle (7) is freely rotatable relative to the guide device (9) when the guide device (9) is located in the region (74) of the receptacle (7).

8. Retracting device according to Claim 7, **characterized in that** the region (74) of the receptacle (7) is produced in such a manner that the guide device (9) can no longer move back out of the region (74) into the region of the receptacle (7) with the external thread (73).

9. Retracting device according to one of the preceding claims, **characterized by** a resetting-force-generating device (52) for exerting a resetting force on the retracting element (51, 51a, 51b).

10. Retracting device according to Claim 9, **characterized in that** the resetting-force-generating device (52) has at least one elastic element (55) which interacts with the receptacle (7) and with which a torque acting on the receptacle (7) in the winding-up direction can be generated.

11. Retracting device according to one of the preceding claims, **characterized by** a blocking device (6) which can be moved from a blocking position, in which it opposes a rotation of the receptacle (7) in the winding-up direction, into a release position, in which it does not oppose a rotation of the receptacle (7) in the winding-up direction, wherein in particular the blocking device (6) transfers into the release position if a torque which exceeds a predeterminable minimum value acts on the receptacle (7) counter to the winding-up direction.

12. Retracting device according to Claim 11 and Claim 10, **characterized in that**, in a starting state of the retracting device (5), the elastic element (55) exerts a torque on the receptacle (7) in the winding-up direction, wherein a rotation of the receptacle (7) in the winding-up direction is blocked, however, by means of the blocking device (6) .

13. Airbag arrangement for a vehicle occupant retracting device of a motor vehicle, with a retracting device (5) according to one of the preceding claims.

14. Airbag arrangement according to Claim 13, **characterized by** an airbag (11) which can be deployed along an outer side of the vehicle (2) for protecting a person external to the vehicle.

15. Airbag arrangement according to Claim 13 or 14, **characterized in that** the retracting device (5) is designed for retrieving a retracting element (51) coupled to the airbag (11).

## Revendications

1. Dispositif de rappel destiné au déplacement d'au moins une portion partielle d'un coussin de gaz déployé le long d'un côté extérieur d'un véhicule hors du champ de vision d'un occupant du véhicule se trouvant sur un siège avant du véhicule, comprenant
- au moins un élément de rappel enroulable (51, 51a, 51b) ;
- un logement rotatif (7) pour enrouler l'élément de rappel (51, 51a, 51b) ; et
- un dispositif de guidage (9) pour guider l'élément de rappel (51, 51a, 51b) lors de l'enroulement sur le logement (7),
**caractérisé en ce que**
le dispositif de guidage (9) est disposé et réalisé de telle sorte qu'il puisse être déplacé par rapport au logement (7) le long d'un axe de rotation du logement (7).

2. Dispositif de rappel selon la revendication 1, **caractérisé en ce que** le dispositif de guidage (9) est connecté de manière rotative au logement (7).

3. Dispositif de rappel selon la revendication 2, **caractérisé en ce que** le logement (7) présente un filetage extérieur (73) et le dispositif de guidage (9) présente un filetage intérieur (91) qui est en prise avec le filetage extérieur (73).

4. Dispositif de rappel selon l'une quelconque des revendications précédentes, **caractérisé en ce que** le dispositif de guidage (9) est disposé et réalisé de telle sorte qu'il se déplace le long de l'axe de rotation du logement lors d'une rotation du logement (7) dans la direction d'enroulement.

5. Dispositif de rappel selon la revendication 4, **caractérisé en ce que** le dispositif de guidage (9) est disposé et réalisé de telle sorte qu'il ne puisse pas tourner par rapport à un boîtier (8) du dispositif de rappel au moins dans la direction d'enroulement, le dispositif de guidage présentant notamment une portion de guidage (93) qui vient en prise à travers une ouverture (81) du boîtier (8).

6. Dispositif de rappel selon la revendication 4 ou 5, dans la mesure où elle se rapporte à la revendication 2, **caractérisé en ce que** le dispositif de guidage (9), lors d'une rotation du logement (7) dans la direction d'enroulement, se déplace le long de l'axe de rotation du logement (7) de telle sorte que l'élément de rappel (51, 51a, 51b) soit déposé dans le filetage extérieur (73) du logement (7).

7. Dispositif de rappel selon l'une quelconque des revendications 4 à 6, dans la mesure où elle se rapporte à la revendication 3, **caractérisé en ce que** le logement (7) présente une région (74) sans filetage extérieur, qui limite un mouvement du dispositif de guidage (9) le long de l'axe de rotation du logement (7), le dispositif de rappel étant réalisé notamment de telle sorte que le logement (7) puisse tourner librement par rapport au dispositif de guidage (9) lorsque le dispositif de guidage (9) se trouve dans la région (74) du logement (7).

8. Dispositif de rappel selon la revendication 7, **caractérisé en ce que** la région (74) du logement (7) est réalisée de telle sorte que le dispositif de guidage (9) ne puisse plus se déplacer de la région (74) pour revenir dans la région du logement (7) avec le filetage extérieur (73).

9. Dispositif de rappel selon l'une quelconque des revendications précédentes, **caractérisé par** un dispositif de génération de force de rappel (52) destiné à exercer une force de rappel sur l'élément de rappel (51, 51a, 51b).

10. Dispositif de rappel selon la revendication 9, **caractérisé en ce que** le dispositif de génération de force de rappel (52) présente au moins un élément élastique (55) coopérant avec le logement (7), avec lequel un couple agissant dans la direction d'enroulement sur le logement (7) peut être généré.

11. Dispositif de rappel selon l'une quelconque des revendications précédentes, **caractérisé par** un dispositif de blocage (6) qui peut être déplacé hors d'une position de blocage dans laquelle il agit à l'encontre d'une rotation du logement (7) dans la direction d'enroulement, dans une position de libération, dans laquelle il ne s'oppose pas à une rotation du logement (7) dans la direction d'enroulement, le dispositif de blocage (6) passant notamment dans la position de libération lorsqu'un couple agit à l'encontre de la direction d'enroulement sur le logement (7), lequel couple dépasse une valeur minimale prédéfinissable.

12. Dispositif de rappel selon les revendications 11 et 10, **caractérisé en ce que** l'élément élastique (55), dans un état initial du dispositif de rappel (5), exerce un couple dans la direction d'enroulement sur le logement (7), une rotation du logement (7) dans la direction d'enroulement étant toutefois bloquée par le dispositif de blocage (6).

13. Agencement de coussin de gaz pour un dispositif de retenue d'un occupant de véhicule d'un véhicule automobile, comprenant un dispositif de rappel (5) selon l'une quelconque des revendications précédentes.

14. Agencement de coussin de gaz selon la revendication 13, **caractérisé par** un coussin de gaz (11) qui peut être déployé pour protéger une personne extérieure au véhicule le long d'un côté extérieur du véhicule (2) .

15. Agencement de coussin de gaz selon la revendication 13 ou 14, **caractérisé en ce que** le dispositif de rappel (5) est réalisé pour rappeler un élément de rappel (51) accouplé au coussin de gaz (11).
